## Europäisches Patentamt
## European Patent Office
## Office européen des brevets

(19)

(11) Numéro de publication: **0 167 447**
**B1**

(12) # FASCICULE DE BREVET EUROPÉEN

(45) Date de publication du fascicule du brevet:
**12.08.87**

(51) Int. Cl.⁴: **C 03 B 7/06**

(21) Numéro de dépôt: **85401274.7**

(22) Date de dépôt: **25.06.85**

(54) Procédé de chauffage d'un canal contenant du verre à l'aide de flammes oxycombustibles.

(30) Priorité: **04.07.84 FR 8410597**

(43) Date de publication de la demande:
**08.01.86 Bulletin 86/2**

(45) Mention de la délivrance du brevet:
**12.08.87 Bulletin 87/33**

(84) Etats contractants désignés:
**AT BE CH DE FR GB IT LI LU NL SE**

(56) Documents cité:
**US-A-3 129 930**
**US-A-3 523 781**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Desprez, Marc, 7, rue Paul Napoléon Roinard, F-92400 Courbevoie (FR)**
Inventeur: **Laurenceau, Serge, 23, rue Champ Lagarde Rés. de la Pépinière, F-78000 Versailles (FR)**

(74) Mandataire: **Vesin, Jacques, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07 (FR)**

EP 0 167 447 B1

## Description

La présente invention concerne un procédé et une installation de chauffage d'un canal de distribution de verre fondu ou "feeder" dans lequel s'écoule une masse de verre en fusion en direction d'une ou plusieurs machines de formage.

Une ligne de fabrication continue du verre comprend successivement un atelier de composition dans lequel on mélange les matières premières qui sont introduites dans le four de fusion, puis un avant-bassin dans lequel le verre fondu passe en vue d'être soumis à un dégazage, puis un ou plusieurs canaux reliés à des machines de formage. Ces canaux ont deux fonctions, à savoir transporter le verre fondu et le conditionner en température.

Le transport du verre fondu est assuré par gravité et l'écoulement de celui-ci se fait à faible vitesse, de l'ordre de quelques mètres par heure.

Le conditionnement en température du verre est la fonction la plus importante du canal de liaison: c'est elle qui permet de fabriquer un produit de qualité élevée et régulière. Cette fonction de conditionnement se compose notamment de trois sous-fonctions:

a) modification de la température du verre fondu: en général refroidissement du verre de la température du four à la température de formage (dans certains cas réchauffement);

b) homogénéisation de la température du verre, afin de limiter les gradients transversaux et verticaux de température;

c) régulation de la température du verre délivré aux machines de formage.

La première sous-fonction peut être réalisée de deux manières différentes:

1°) on refroidit violemment le verre pendant une courte durée, puis on le laisse s'homogénéiser en température. Cette méthode nécessite des moyens de refroidissement internes (ventilation, circulation d'eau) qui réduisent le rendement effectif des équipements de chauffage installés pour maintenir un niveau de température suffisant dans le canal. De plus, cette technique demande une certaine connaissance des écoulements du verre dans le canal de façon à éviter des gradients transversaux de température trop importants.

2°) On refroidit d'une façon continue et très lente le verre et avec cette technique on a uniquement recours au refroidissement naturel dû aux pertes par les parois du canal.

Pour réaliser la deuxième sous-fonction, à savoir l'homogénéisation de la température du verre, il est nécessaire de réchauffer les zones marginales de la surface supérieure de la veine de verre car les couches extérieures de cette veine de verre se refroidissent beaucoup plus vite que le coeur, du fait que le verre est un bon isolant et que dans une masse de verre, même chaud, les transferts de chaleur sont faibles. Les brûleurs utilisés ainsi pour réchauffer les zones marginales de la veine de verre sont généralement alimentés à partir d'une nourrice contenant un prémélange d'air froid et du gaz combustible, ce qui présente un certain danger en cas d'extinction de la flamme.

Pour réaliser la troisième sous-fonction qui est rendue nécessaire pour obtenir une qualité constante du produit fini, le canal comporte plusieurs zones successives dont le chauffage est piloté globalement à partir d'une seule sonde de température.

Les techniques antérieures utilisées pour assumer les trois fonctions précitées présentent un certain nombre d'inconvénients, à savoir.:

a) un mauvais rendement thermique de la flamme mettant en oeuvre de l'air froid;

b) une difficulté pratique d'assurer le chauffage préférentiel des zones marginales de la veine de verre s'écoulant dans le canal;

c) un risque d'explosion dans la nourrice d'alimentation des brûleurs résultant de l'utilisation d'un prémélange air/gaz combustible;

d) une difficulté de réguler avec précision le rapport air/gaz combustible conduisant à des combustions incomplètes ne présentant pas un rendement optimal;

e) une difficulté à répondre, à l'aide des moyens de chauffage à flamme actuels, à une variation brutale des conditions de fonctionnement du four qui conduit de plus en plus les verriers à avoir recours à l'électricité pour assurer le chauffage partiel ou complet du canal par effet Joule direct dans le bain de verre.

Le brevet américain US-A-3.129.930 décrit un matériel pour le chauffage de bains d'acier ou de verre fondus. Le chauffage du bain s'effectue avec une pluralité de brûleurs espacés le long du four, ces brûleurs pouvant être des brûleurs à combustibles. Une telle disposition de brûleurs ne répond pas au problème spécifique des canaux d'alimentation des fours de verre, dont le profil de température doit être contrôlé.

Plus récemment, le brevet américain 3.523.781 qui décrit un procédé et une installation selon les préambules des revendications 1 et 5, pose le problème de l'homogénéité de température du verre dans un "feeder", et en particulier de l'homogénéité de température dans un plan transversal, à la surface de la veine de verre.

La solution donnée dans ce brevet pour résoudre ce problème consiste à chauffer le canal par des sources de chaleur (par exemple des brûleurs) débouchant dans les parois latérale du feeder, cette chaleur étant, d'une part, envoyée sur la voûte qui la rayonne sur le bain en fusion et d'autre part dirigée sur les zones latérales du canal.

En pratique, une telle solution est coûteuse car le chauffage direct de la voûte entraîne un vieillissement accéléré et un changement fréquent de celle-ci.

De plus, la Demanderesse a constaté que la présence de moyens de chauffage tels que des brûleurs dans les parois latérales du canal ne permettait pas d'obtenir une bonne homogénéité de profils de température tout au long du canal, car l'isolation des parois latérales du feeder est difficile au niveau des ouvreaux de passage desdits brûleurs.

Plus récemment, les brevets français FR-A-2.022.539, FR-A- 2.220.480 et FR-A- 2.350.309 ont tenté de résoudre le même problème par différents artifices consistant à prévoir une géométrie particulière de la voûte du four ou un chauffage électrique d'appoint dans les zones latérales du canal.

Aucune des solutions proposées jusqu'à ce jour ne permet de résoudre simplement le problème ainsi posé.

Le procédé selon l'invention permet d'éviter les inconvénients rappelés plus haut et de résoudre le problème posé.

A cet effet ce procédé est caractérisé en ce que l'on chauffe les zônes marginales longitudinales de la surface supérieure de la veine de verre au moyen de rideaux de flammes provenant du centre de la voûte et dirigés vers ces zônes marginales, en ce que lesdites flammes sont issues de brûleurs oxy-combustibles, la combustion des gaz desdites flammes étant terminée lorsque celles-ci atteignent la surface du verre en fusion.

Le procédé et l'installation de chauffage suivant l'invention offrent plusieurs avantages par rapport aux techniques connues. En premier lieu, on obtient une amélioration sensible du rendement thermique de la flamme du fait de l'emploi de brûleurs oxycombustibles, étant donné la réduction, voir la suppression, du ballast d'azote apporté par l'air de combustion. Il en résulte une diminution des pertes thermiques par les fumées et par conséquent une économie importante sur la consommation d'énergie. En outre, l'élévation de la température de la flamme provoque un net accroissement du transfert de chaleur direct flamme-verre par rayonnement et par convection, avec naissance d'éléments dissociés qui libèrent de la chaleur par recombinaison au contact avec la surface de la veine de verre chaud.

Par ailleurs, une plus grande sécurité de fonctionnement est assurée du fait de l'utilisation de brûleurs à mélange au nez et on obtient également une grande facilité de réglage du rapport oxygène/gaz permettant une optimalisation de la combustion. En outre, la disposition des brûleurs dans le canal permet d'éviter tous les problèmes relatifs à la tenue des réfractaires constituant la super-structure de ce canal et à l'isolation thermique de la partie inférieure du canal, et d'exploiter au mieux l'amélioration des transferts convectifs résultant de l'utilisation de l'oxygène pur.

L'idée-mère de l'invention est de réaliser le chauffage en voûte du canal à l'aide de rideaux de flammes provenant du centre de la voûte et inclinées vers les zones marginales du canal. On constate d'une part, une amélioration du transfert thermique en dirigeant la flamme sur la charge et d'autre part, une isolation thermique beaucoup plus facile des parois latérales. En pratique, il est nécessaire que la combustion des gaz soit terminée lorsque la flamme rencontre le verre (point d'impact). De plus, la voûte doit être percée d'au moins une ouverture par rideau de flammes, permettant l'échappement des fumées. Ces ouvertures doivent être disposées de telle sorte que le trajet des gaz dans l'enceinte soit le plus long possible afin de favoriser les échanges thermiques, de sorte que la température des fumées émises ne soit pas supérieure de plus de 50° C (et de préférence 20° C) à celle du bain de verre en fusion, au centre du canal.

Le chauffage doit s'effectuer avec des flammes divergentes, du centre vers les bords latéraux du canal. Ceci permet une grande simplicité de réalisation (un seul brûleur), un équilibrage relatif aisé des flammes, un bon transfert de chaleur compte tenu du fait que les flammes sont inclinées au-dessus du bain.

Selon un premier mode préférentiel de réalisation, le procédé selon l'invention est caractérisé en ce que l'extrémité de chaque flamme du brûleur oxycombustible est située à proximité de la surface de la veine de verre en fusion, la distance h entre l'extrémité du brûleur où jaillit la flamme, et la surface de la veine en fusion étant sensiblement égale à la distance $\underline{d}$ entre l'extrémité de chaque flamme et la verticale passant par ladite extrémité du brûleur, la largeur L du canal et la distance $\underline{d}$ étant liées par la relation:

$$\frac{L}{3} < 2d < \frac{4L}{5} \cdot$$

Selon un autre mode préférentiel, le procédé selon l'invention est caractérisé en ce que le brûleur oxycombustible est placé à une distance de la surface du bain de verre en fusion telle que l'impact de chaque flamme sur ledit bain se produise lorsque tous les gaz de la flamme sont brûlés, le point d'impact étant défini comme le point correspondant à une température du verre en fusion égale à

$$\frac{T1 + \alpha T2}{\alpha + 1}$$

sur la courbe de profil transversal de température du verre en fusion dans le même canal avant la mise en place du brûleur oxycombustible, T1 étant la température maximale du verre dans le canal, T2 la température minimale dans le canal et $\alpha$ un coefficient variant sensiblement linéairement de 2 à 5 suivant le débit de verre dans le canal, $\alpha$ étant voisin de 2 aux forts débits et voisin de 5 aux faibles débits.

Bien entendu, le canal étant généralement sensiblement symétrique, le brûleur sera de préférence placé dans ce plan de symétrie et les flammes disposées symétriquement par rapport à ce plan. Mais ceci n'exclut pas d'avoir des inclinaisons différentes entre différentes flammes d'une même rangée, de manière à "balayer" chaque zone latérale du canal.

L'invention a également pour objet une installation de chauffage selon le préambule de la revendication 5, caractérisée en ce que la voûte du canal porte d'une part au moins un ensemble de brûleurs oxycombustibles reliés à une source d'oxygène et à une source de gaz combustible, ces brûleurs placés dans la partie centrale de la voûte étant orientés de manière à produire des rideaux de flammes dirigées vers les zones marginales longitudinales de la surface supérieure de la veine de verre fondu, et d'autre part au moins une ouverture associée à un rideau de flammes, ces ouvertures ayant des dimensions telles qu'une surpression de gaz de quelques millimètres d'eau est maintenue au dessus du verre en fusion, de manière à éviter les entrées d'air.

On décrira ci-après, à titre d'exemples non limitatifs, diverses formes d'exécution de la présente invention, en référence au dessin annexé sur lequel:

- la figure 1 est une vue en coupe verticale et transversale schématique d'un canal de transfert d'une veine de verre fondu pourvu d'une installation de chauffage suivant l'invention; et

- la figure 2 est une vue en plan schématique du canal de la figure 1; et

- la figure 3 un profil transversal de température du canal avant et après utilisation du procédé selon l'invention.

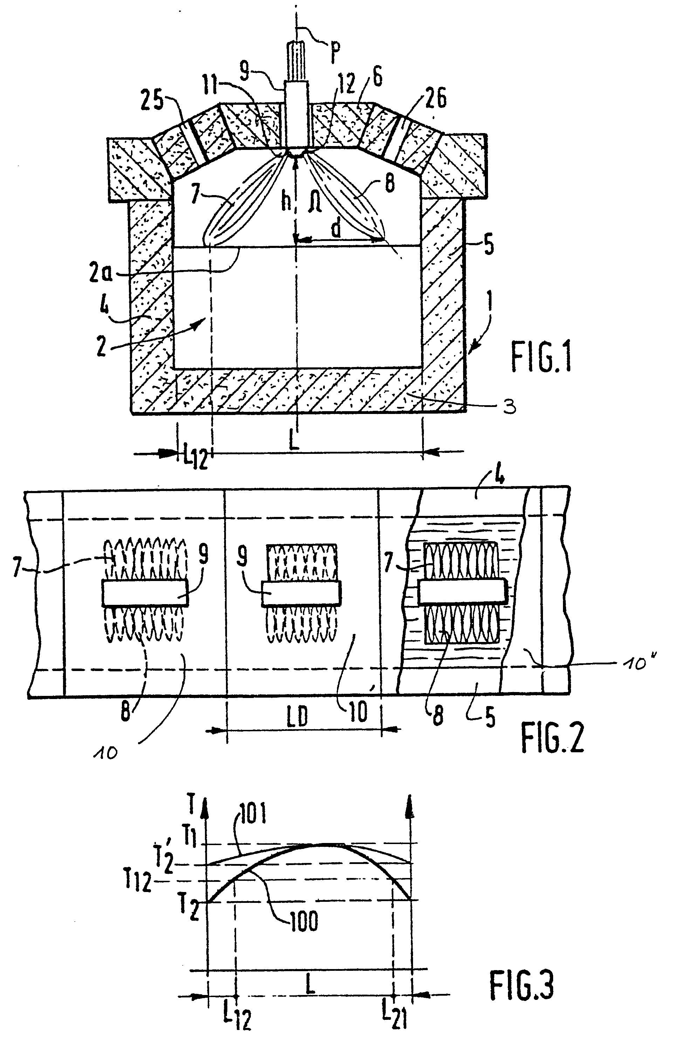

Les figures 1 et 2 représentent une installation de chauffage d'un canal 1 dans lequel s'écoule une veine de verre fondu 2, en provenance d'un four de fusion et un direction d'une ou plusieurs machines de formage situées en aval. Ce canal 1 présente une section droite en forme de U, de largeur L. Il est constitué par une sole 3, des parois verticales 4 et 5 et il est fermé, à sa partie supérieure, par une voûte 6, tous ces éléments étant en un matériau réfractaire.

Pour conditionner la veine de verre 2, de manière à rendre sa température la plus homogène possible, il est prévu, suivant l'invention, de chauffer les zone marginales longitudinales de la surface supérieure 2a de la veine de verre 2, au moyen de deux rideaux de flammes 7, 8 dirigées vers ces zones.

Dans la forme d'exécution illustré sur les figures 1 et 2, ces deux rideaux de flamme 7, 8 sont produits par une rampe 9 de brûleurs 11, 12, cette rampe 9 étant montée verticalement et longitudinalement dans la partie centrale de la voûte 6.

L'angle $\Omega$ d'inclinaison, par rapport à la verticale, des deux rideaux de flammes 7, 8 étant défini par la structure de brûleurs 9, il est possible de faire varier le point d'impact des rideaux de flammes 7, 8 sur la surface supérieure 2a de la veine de verre fondu 2, c'est-à-dire la distance $\underline{d}$ sur la figure 1. Le réglage s'effectue comme explicité plus haut. De plus, deux cheminées d'évacuation des fumées sont prévues, 25 et 26, chacune étant disposée dans l'exemple présent sensiblement au-dessus du point d'impact des flammes sur le verre.

Sur la figure 2, sont illustrés successivement plusieurs brûleurs disposés le long du canal d'alimentation en verre. En pratique, on dispose un brûleur par cellule 10, 10', 10", etc... Chaque brûleur est espacé du brûleur suivant d'une distance sensiblement égale à sa longueur (environ 30 cm). On utilise des brûleurs refroidis à l'eau débouchant dans l'enceinte avec un faible jeu d'introduction entre ouvreau et brûleur.

La figure 3 représente un profil de température avec et sans utilisation du procédé selon l'invention. La courbe 100 représente le profil de température transversal du feeder que l'on veut modifier selon l'invention, chauffé avec ses moyens conventionnels. Cette courbe est bien connue pour chaque canal de four de verre. T2 est la température minimale vers les bords, T1 est la température maximale vers le centre (voir pour plus de détails concernant ces profils de température, par exemple, FR-A- 2.220.480). Compte tenu du débit de verre dans le canal, on applique un coefficient $\alpha$ proportionnel au débit pour corriger l'influence de celui-ci dans la détermination du point d'impact des flammes. Pour le débit maximal du feeder, le coefficient $\alpha$ sera égal à 2 et pour le débit minimal du feeder (dans les conditions habituelles d'utilisation), le coefficient $\alpha$ sera égal à 5, $\alpha$ variant linéairement entre ces deux valeurs en fonction du débit. On détermine ainsi une température
$$T12 = \frac{T1 + \alpha\, T2}{\alpha + 1}$$
en fonction du coefficient $\alpha$ choisi.

La courbe 100 permet de déterminer les abscisses L12 et L21 du point d'impact des rideaux de flamme, ces points d'impact étant approximativement symétriques par rapport au plan P (figure 1). Le chauffage du feeder selon le procédé de l'invention permet d'obtenir un profil de température représenté par la courbe 101, dont la température minimale T'2 est supérieure à T2. Ainsi, on améliore le profil de température de la manière souhaitée, à l'aide de moyens simples.

**Revendications**

1. Procédé de chauffage d'un canal (1), recouvert d'une voûte (6), dans lequel s'écoule une veine de verre en fusion (2), en direction d'une ou de plusieurs machines de formage, cette veine de verre en fusion (2) étant chauffée au moyen de brûleurs alimentés en gaz destinés à produire des flammes de combustion, caractérisé en ce que l'on chauffe les zônes marginales longitudinales de la surface supérieure (2a) de la veine de verre (2) au moyen de rideaux de flammes (7, 8) provenant du centre de la voûte et dirigés vers ces zônes marginales, en ce que lesdites flammes (7, 8) sont issues de brûleurs oxy-combustibles (11, 12, 21, 22), la combustion des gaz desdites flammes (7, 8) étant terminée lorsque celles-ci atteignent la surface (2a) du verre en fusion.

2. Procédé selon la revendication 1, caractérisé en ce que l'extrémité de chaque flamme du brûleur oxycombustible est située à proximité de la surface de la veine de verre en fusion, la distance de l'extrémité du brûleur où jaillit la flamme, à la surface de la veine en fusion étant sensiblement égale à la distance d entre l'extrémité de chaque flamme à la verticale passant par ladite extrémité du brûleur, la largeur L du canal et la distance d étant liées par la relation:

$$\frac{L}{3} < 2d < \frac{4L}{5}$$

3. Procédé selon la revendication 1, caractérisé en ce que le brûleur oxycombustible est placé à une distance d de la surface du bain de verre en fusion telle que l'impact de chaque flamme sur ledit bain se produise lorsque tous les gaz de la flamme sont brûlés, ledit point d'impact étant défini comme le point correspondant à une température du verre en fusion égale à

$$\frac{T1 + \alpha T2}{\alpha + 1}$$

sur la courbe de profil transversal de température du verre en fusion dans le même canal avant la mise en place du brûleur, T1 étant la température maximale du verre dans le canal, T2 la température minimale dans le canal et α un coefficient variant sensiblement linéairement de 2 à 5 suivant le débit de verre dans le canal, α étant voisin de 2 aux forts débits et voisin de 5 aux faibles débits.

4. Procédé selon l'une des revendications 1 à 3 dans lequel le canal est sensiblement symétrique par rapport à un plan vertical parallèle à la direction d'avance du verre fondu, caractérisé en ce que le brûleur est disposé dans le plan de symétrie et en ce que les rideaux de flammes sont disposés symétriquement par rapport à ce plan.

5. Installation de chauffage d'un canal (1) recouvert d'une voûte dans lequel s'écoule une veine de verre en fusion, en direction d'une ou plusieurs machines de formage, caractérisée en ce que ladite voûte (6) du canal (1) porte d'une part, au moins un ensemble de brûleurs oxycombustibles (11, 12; 21, 22) relié à une source d'oxygène et à une source de gaz combustible, ces brûleurs, placés dans la partie centrale de la voûte (6) étant orientés de manière à produire des rideaux de flammes (7, 8) dirigées vers les zones marginales longitudinales de la surface supérieure (2a) de la veine de verre fondu (2), et d'autre part, au moins une ouverture (25, 26) associée a un rideau de flammes, ces ouvertures (25, 26) ayant des dimensions telles qu'une surpression de gaz de quelques millimetres d'eau est maintenue au-dessus du verre en fusion, de manière à éviter les entrées d'air.

6. Installation suivant la revendication 5, caractérisée en ce que la voûte (6) porte une rampe (9) de brûleurs (11, 12) reliés aux sources de combustible et d'oxygène, ces brûleurs étant inclinés d'un même angle (Ω) par rapport au plan de symétrie longitudinal et vertical (P) de la rampe (9) et répartis en deux ensembles symétriques l'un de l'autre par rapport à ce plan.

7. Installation suivant la revendication 3, caractérisée en ce que la rampe (9) de brûleurs (11, 12) est située à une hauteur réglable (h) par rapport à la surface supérieure (2a) de la veine de verre fondu.

## Patentansprüche

1. Verfahren zum Erwärmen eines Kanals (1), der mit einem Gewölbe (6) bedeckt ist, in welchem eine Ader von in Schmelze befindlichem Glas (2) in Richtung einer oder mehrerer Formmaschinen fließt, wobei diese Ader von in Schmelze befindlichem Glas (2) mittels Brennern erwärmt wird, die mit Gas versorgt sind, welche zur Erzeugung von Verbrennungsflammen bestimmt sind, dadurch gekennzeichnet, daß man die Längsrandzonen der oberen Fläche (2a) der Glasader (2) mittels Flammenwänden (7, 8) erwärmt, die aus der Mitte des Gewölbes kommen und zu den Randzonen gerichtet werden, und daß die Flammen (7, 8) von Sauerstoffbrennstoffbrennern (11, 12, 21, 22) stammen, wobei die Verbrennung der Gase dieser Flammen (7, 8) abgeschlossen ist, wenn sie die Oberfläche (2a) des in Schmelze befindlichen Glases erreichen.

2. Verfahren nach Anspruch 1, dadurch gekennzeichnet, daß das äußerste Ende jeder Flamme des Sauerstoffbrennstoffbrenners in der Nähe der Oberfläche der Ader des in Schmelze befindlichen Glases angeordnet ist, wobei der Abstand des äußersten Endes des Brenners, wo die Flamme herausschlägt, zur Oberfläche der Ader des in Schmelze befindlichen Glases im wesentlichen gleich dem Abstand d zwischen dem äußersten Ende jeder Flamme und der Vertikalen ist, welche durch dieses äußere Ende des Brenners hindurchgeht, wobei die Länge L des Kanals und der Abstand d durch die Ungleichung verbunden sind:

$$\frac{L}{3} < 2d < \frac{4L}{5}$$

3. Verfahren nach Anspruch 1, dadurch gekennzeichnet, daß der Sauerstoffbrennstoffbrenner in einem Abstand d von der Oberfläche des Bades des in Schmelze befindlichen Glases derart angeordnet ist, daß der Auftreffpunkt jeder Flamme auf das Bad sich einstellt, wenn alle Gase der Flamme verbrannt sind, wobei der Auftreffpunkt als der Punkt definiert ist, welcher einer Temperatur des in Schmelze befindlichen Glases gleich

$$\frac{T1 + \alpha T2}{\alpha + 1}$$

auf der Kurve des Querprofils der Temperatur des in Schmelze befindlichen Glases in demselben Kanal entspricht, bevor der Brenner an seinen Platz gebracht ist, wobei T1 die Maximaltemperatur des Glases in dem Kanal ist, T2 die minimale Temperatur in dem Kanal ist und α ein Koeffizient ist, der sich merklich linear von 2 bis 5 entsprechend dem Durchsatz an Glas in dem Kanal verändert, wobei α bei großen Durchsätzen in der Nachbarschaft von 2 und bei schwachen Durchsätzen in der Nachbarschaft von 5 liegt.

4. Verfahren nach einem der Ansprüche 1 bis 3, bei welchem der Kanal bezüglich einer vertikalen Ebene parallel zur Vorlaufrichtung des geschmolzenen Glases im wesentlichen symmetrisch ist, dadurch gekennzeichnet, daß der Brenner in der Symmetrieebene angeordnet ist und daß die Flammenwände bezüglich dieser Ebene symmetrisch angeordnet sind.

5. Anlage zum Erwärmen eines Kanals (1), der mit einem Gewölbe bedeckt ist, in welchem eine Ader von in Schmelze befindlichem Glas in Richtung einer oder mehrerer Formmaschinen fließt, dadurch gekennzeichnet, daß das Gewölbe (6) des Kanals (1) einerseits mindestens eine Gesamtheit von Sauerstoffbrennstoffbrennern (11, 12; 21, 22) aufweist, die mit einer Sauerstoffquelle und mit einer Quelle mit brennbarem Gas verbunden ist, wobei diese Brenner, die im Mittelteil des Gewölbes (6) angeordnet sind, derart ausgerichtet sind, daß sie Flammenwände (7, 8) erzeugen, die zu den Längsrandzonen der oberen Fläche (2a) der Ader von in Schmelze befindlichem Glas (2) gerichtet sind, und andererseits mindestens eine Öffnung (25, 26) aufweist, welche einer Flammenwand zugeordnet ist, wobei die Öffnungen (25, 26) solche Maße haben, daß ein Überdruck an Gas von einigen mm Wassersäule über dem in Schmelze befindlichen Glas aufrechterhalten wird, um den Eintritt von Luft zu vermeiden.

6. Anlage nach Anspruch 5, dadurch gekennzeichnet, daß das Gewölbe (6) eine Reihe (9) von Brennern (11, 12) aufweist, die mit Brennstoff- und Sauerstoffquellen verbunden sind, wobei diese Brenner unter demselben Winkel (Ω) bezüglich der Längs- und Vertikalsymmetrieebene (P) der Reihe (9) geneigt sind und in zwei Gruppen aufgeteilt sind, die bezüglich dieser Ebene zueinander symmetrisch sind.

7. Anlage nach Anspruch 3, dadurch gekennzeichnet, daß die Reihe (9) von Brennern (11, 12) auf einer regelbaren Höhe (h) bezüglich der oberen Fläche (2a) der Ader geschmolzenen Glases angeordnet ist.

**Claims**

1. Method for heating a channel (1) covered by an arched roof (6) in which a vein of molten glas (2) is flowing in a direction of one or more forming machines, this vein of molten glas (2) being heated by means of burners supplied with gas determined to produce combustion flames, characterized in that one heats the longitudinal marginal zones of the upper surface (2a) of the glas vein (2) by means of flame walls (7, 8) originating from the center of the arched roof and directed towards these marginal zones, in that the said flames (7, 8) descend from oxygen-combustible burners (11, 12; 21, 22), a combustion of gases of the said flames (7, 8) being terminated when these reach the surface (2a) of the molten glas.

2. Method according to claim 1, characterized in that the end of each flame of the oxygen-combustible burner is situated in the proximity of the surface of the vein of molten glas, the distance of the end of the burner where the flame squirts to the surface of the vein of molten glas being generally equal to the distance d between the end of each flame and the vertical passing through the said end of the burner, the length L of the channel and the distance d being connected by the relation:

$$\tfrac{L}{3} < 2d < \tfrac{4L}{5}$$

3. Method according to claim 1, characterized in that the oxygen-combustible burner is placed at the distance d from the surface of the bath of molten glas such that the impact of each flame on the said bath is produced when all the gases of the flame are burned, the said point of impact being defined as the point corresponding to a temperature of the molten glas equal to

$$\frac{T1 + \alpha T2}{\alpha + 1}$$

on the curve of the transversal profile of the temperature of the molten glas in the same channel before placing the burner, T1 being the maximum temperature of glas in the channel, T2 the minimum temperature in the channel and $\alpha$ a coefficient varying generally in a linear manner from 2 to 5 according to the amount of glas in the channel, $\alpha$ being close to 2 with important amounts and being close to 2 with small amounts.

4. Method according to one of the claims 1 to 3 in which the channel is generally symmetrical with respect to a vertical plane parallel to the direction of advance of the molten glas, characterized in that the burner is positioned in the plane of symmetry and in that the flame walls are positioned symmetrically with respect to this plane.

5. Installation for heating a channel (1) covered by an arched roof, in which a vein of molten glas is flowing in a direction of one or more forming machines, characterized in that the said arching roof (6) of the channel (1) supports on the one side at least one set of oxygen-combustible burners (11, 12; 21, 22) connected to an oxygen-source and to a source for combustible gas, these burners placed in the central part of the arched roof (6) being oriented such as to produce flame walls (7, 8) directed towards the longitudinal marginal zones of the upper surface (2a) of the vein of molten glas (2), and on the other side supports at least one apperture (25, 26) associated to a flame wall, these appertures (25, 26) having dimensions such that an overpressure of gas of some mm water is maintained above the molten glas in order to avoid the entry of air.

6. Installation according to claim 5, characterized in that the arched roof (6) supports and array (9) of burners (11, 12) connected to sources of combustible and oxygen, these burners being inclined at the same angle (Ω) with respect to the longitudinal and vertical plane of symmetry (P) of the array (9) and distributed in two sets symmetrical to each other with respect to this plane.

7. Installation according to claim 3, characterized in that the array (9) of the burners (11, 12) is positioned at a controllable height (h) with respect to the upper surface (2a) of the vein of molten glas.

0 167 447

FIG.1

FIG.2

FIG.3